# EUROPEAN PATENT APPLICATION

(11) **EP 4 033 720 A1**
(43) Date of publication of application: **27.07.2022**
(21) Application number: 19950922.5
(22) Date of filing: 28.10.2019
(51) Int. Cl.: H04L 29/08

(54) **COMMUNICATION METHOD AND DEVICE**

(71) Applicant: Huawei Technologies Co., Ltd., Longgang District Shenzhen, Guangdong 518129 (CN)
(72) Inventor: YU, Yawei, Shenzhen, Guangdong 518129 (CN); LI, Chaojun, Shenzhen, Guangdong 518129 (CN)
(74) Representative: Isarpatent
(86) International application number: PCT/CN2019/113751
(87) International publication number: WO 2021/081715

(57) **Abstract**

This application provides a communication method and an apparatus, and relates to the field of communication technologies, and in particular, to the field of machine type communication MTC or narrowband internet of things NB-IoT. In the communication method of this application, a network device generates a downlink reference signal sequence, where the downlink reference signal sequence is used to indicate at least one terminal device whether to be activated within on duration time; the network device sends the downlink reference signal sequence to the at least one terminal device, and the at least one terminal device includes a first terminal device; and the first terminal device determines, based on an indication of the downlink reference signal sequence, whether to be activated within the on duration time. The downlink reference sequence, for example, a channel state information reference signal CSI-RS sequence, is used to indicate the at least one terminal device whether to be activated within the on duration time, so that information reusing is implemented, thereby reducing power consumption of the terminal device while saving signaling, and improving communication efficiency.

## Description

### TECHNICAL FIELD

This application relates to communication technologies, and in particular, to a communication method and an apparatus.

### BACKGROUND

In a new radio (New Radio, NR) access technology protocol, after a terminal device and a network device complete uplink and downlink synchronization, the terminal device in a connected mode performs uplink and downlink data transmission, including data receiving and sending. If service data packets are transmitted in a burst mode, there may be a long time interval between two service data packets that arrive at the terminal device. However, if the terminal device monitors downlink control signaling in each slot (slot), after receiving the downlink control signaling, the terminal device may correctly receive, with a shortest latency and based on an indication of the downlink control signaling, the service data packets, including an uplink scheduling grant or downlink sending data. However, the terminal device is always in an active state to monitor the downlink control signaling, and this causes large power consumption, especially when there are a small quantity of burst service data packets and a long time interval.

To reduce the power consumption of the terminal device, connected discontinuous reception (Connected-Discontinuous Receiving, C-DRX) is introduced in an NR system. The network device semi-statically configures a C-DRX cycle length based on a service requirement, and configures one piece of C-DRX on duration time (on duration time) in each C-DRX cycle. Within the C-DRX on duration time, the terminal device is in the active state, and monitors the downlink control signaling. When the C-DRX on duration time expires and no data packet further arrives, the terminal device enters a sleep state, to implement energy saving of the terminal device when no data packet is transmitted.

Keeping the active state in each piece of on duration time in each cycle may also cause an additional power loss to the terminal device, especially in a scenario in which the network device sends a small quantity of data packets or sends no data packet. Based on this, a flexible mechanism is required to control or manage state switching of the terminal device, to further reduce power consumption and improve communication efficiency.

### SUMMARY

This application provides a communication method and an apparatus, to indicate wake-up information by using a downlink reference signal sequence, so that power consumption of a terminal device is reduced and communication efficiency is improved.

According to a first aspect, this application provides a communication method, including:
generating a downlink reference signal sequence, where the downlink reference signal sequence is used to indicate at least one terminal device whether to be activated within on duration time; and sending the downlink reference signal sequence to the at least one terminal device.

A network device uses the downlink reference signal sequence to carry wake-up signal (Wake Up Signal, WUS) information, so that the downlink reference signal sequence can implement a function of a WUS. The terminal device is woken up only when there is downlink data to be sent and the terminal device needs to monitor and receive the downlink data. Because the downlink reference signal sequence and an additional wake-up signal do not need to be separately sent, for a transmitter side, such as the network device, and a receiver side, such as the terminal device, power is saved. Further, a processing procedure is simplified, and communication efficiency is improved.

In a possible implementation, the downlink reference signal sequence is a channel state information reference signal (Channel State Information, CSI-RS) sequence.

By using the CSI-RS sequence as the downlink reference signal sequence, an existing sequence may be reused, thereby reducing signaling overheads.

In a possible implementation, the downlink reference signal sequence is further used to indicate whether to trigger the at least one terminal device to report channel state information (Channel State Information, CSI).

The network device uses the CSI-RS sequence to carry the WUS information. In this way, the downlink reference signal sequence can implement the function of the WUS, and wake up the terminal device only when there is the downlink data to be sent and the terminal device needs to monitor and receive the downlink data, so that power consumption of the terminal device is reduced. In addition, the downlink reference signal sequence can implement a function of a CSI-RS and is used to measure a channel state and trigger the terminal device to perform CSI reporting. Therefore, communication efficiency can be improved.

In a possible implementation, information carried on the downlink reference signal sequence includes a first field, where the first field is used to indicate the at least one terminal device whether to be activated within the on duration time.

In a possible implementation, the information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the sending the downlink reference signal sequence to the at least one terminal device includes: sending the downlink reference signal sequence to the at least one terminal device before the on duration time or within the on duration time. In a possible implementation, the on duration time is configured by using the network device.

According to a second aspect, this application provides a communication method, including: receiving a downlink reference signal sequence, where the downlink reference signal sequence is used to indicate at least one terminal device whether to be activated within on duration time, and the at least one terminal device includes a first terminal device; and determining whether the first terminal device is activated within the on duration time.

A network device uses the downlink reference signal sequence to carry WUS information, so that the downlink reference signal sequence can implement a function of the WUS. The terminal device is woken up only when there is downlink data to be sent and the terminal device needs to monitor and receive the downlink data. Because the downlink reference signal sequence and an additional wake-up signal do not need to be separately sent, for a transmitter side, such as the network device, and a receiver side, such as the terminal device, power is saved. Further, a processing procedure is simplified, and communication efficiency is improved.

In a possible implementation, when the downlink reference signal sequence is a channel state information reference signal CSI-RS sequence, the existing CSI-RS sequence may be reused, thereby reducing signaling overheads.

In a possible implementation, the downlink reference signal sequence is further used to indicate whether to trigger the at least one terminal device to report channel state information CSI.

The network device uses the CSI-RS sequence to carry the WUS information. The downlink reference signal sequence can implement a function of the WUS, and wake up the terminal device only when there is the downlink data to be sent and the terminal device needs to monitor and receive the downlink data, so that power consumption of the terminal device is reduced. In addition, the downlink reference signal sequence can implement a function of a CSI-RS and is used to measure a channel state and trigger the terminal device to perform CSI reporting. Therefore, communication efficiency can be improved.

In a possible implementation, information carried on the downlink reference signal sequence includes a first field, where the first field is used to indicate the at least one terminal device whether to be activated within the on duration time.

In a possible implementation, the information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the receiving a downlink reference signal sequence includes: receiving the downlink reference signal sequence before the on duration time or within the on duration time.

In a possible implementation, the method further includes: when the downlink reference signal sequence is received before the on duration time, if the downlink reference signal sequence indicates the at least one terminal device to be activated within the on duration time, monitoring a physical downlink channel; or, when the downlink reference signal sequence is received within the on duration time, if the downlink reference signal sequence indicates the at least one terminal device not to be activated within the on duration time, entering a sleep state.

In a possible implementation, the on duration time is configured by using the network device.

According to a third aspect, this application provides a communication method, including:
monitoring a downlink reference signal sequence, where the downlink reference signal sequence corresponds to at least one terminal device, and the at least one terminal device includes a first terminal device; determining, depending on whether the downlink reference signal sequence is detected, whether the first terminal device is activated within on duration time.

Such a method has advantages of the method in the first aspect described above. In addition, whether the downlink reference signal sequence is detected may indicate the first terminal device whether to be activated within the on duration time. No additional signaling is required, so signaling overheads are reduced.

It may be understood that the on duration time may be configured by using the network device. Alternatively, if both communication parties negotiate or comply with a predefined definition or agreement, for example, a table or a correspondence, signaling may be saved.

In a possible implementation, when the downlink reference signal sequence is a channel state information reference signal CSI-RS sequence, the existing CSI-RS sequence may be reused, thereby reducing signaling overheads.

In a possible implementation, the downlink reference signal sequence is further used to indicate whether to trigger the at least one terminal device to report channel state information CSI. In this way, a terminal may trigger an action based on the indication.

Such a method has similar advantages of the method in the first aspect, and details are not described again.

In a possible implementation, information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the monitoring a downlink reference signal sequence includes: monitoring the downlink reference signal sequence before the on duration time or within the on duration time.

In a possible implementation, the method further includes: When the downlink reference signal sequence is detected before the on duration time, the terminal device is activated within the on duration time to monitor a physical downlink channel; or, when the downlink reference signal sequence is detected within the on duration time, the terminal device enters a sleep state within the on duration time.

According to a fourth aspect, this application provides an apparatus, including: a processing module, configured to generate a downlink reference signal sequence, where the downlink reference signal sequence is used to indicate at least one terminal device whether to be activated within on duration time; and a sending module, configured to send the downlink reference signal sequence to the at least one terminal device. In a possible implementation, the downlink reference signal sequence is a channel state information reference signal CSI-RS sequence.

In a possible implementation, the downlink reference signal sequence is further used to indicate whether to trigger the at least one terminal device to report channel state information CSI.

In a possible implementation, information carried on the downlink reference signal sequence includes a first field, where the first field is used to indicate the at least one terminal device whether to be activated within the on duration time.

In a possible implementation, the information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the sending module is specifically configured to send the downlink reference signal sequence to the at least one terminal device before the on duration time or within the on duration time.

The apparatus in this aspect is similar to the method in the first aspect, and therefore has corresponding advantages. Details are not described again.

According to a fifth aspect, this application provides an apparatus, including: a receiving module, configured to receive a downlink reference signal sequence, where the downlink reference signal sequence is used to indicate whether at least one terminal device is activated within on duration time, and the at least one terminal device includes a first terminal device; and a processing module, configured to determine the first terminal device whether to be activated within the on duration time.

In a possible implementation, the downlink reference signal sequence is a channel state information reference signal CSI-RS sequence.

In a possible implementation, the downlink reference signal sequence is further used to indicate whether to trigger the at least one terminal device to report channel state information CSI.

In a possible implementation, information carried on the downlink reference signal sequence includes a first field, where the first field is used to indicate the at least one terminal device whether to be activated within the on duration time.

In a possible implementation, the information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the receiving module is specifically configured to receive the downlink reference signal sequence before the on duration time or within the on duration time.

In a possible implementation, the processing module is further configured to: when the downlink reference signal sequence is received before the on duration time, if the downlink reference signal sequence indicates the at least one terminal device to be activated within the on duration time, monitor a physical downlink channel; or, when the downlink reference signal sequence is received within the on duration time, if the downlink reference signal sequence indicates the at least one terminal device not to be activated within the on duration time, enter a sleep state.

The apparatus in this aspect is similar to the method in the second aspect, and therefore has corresponding advantages. Details are not described again.

According to a sixth aspect, this application provides an apparatus, including: a receiving module, configured to monitor a downlink reference signal sequence, where the downlink reference signal sequence corresponds to at least one terminal device, and the at least one terminal device includes a first terminal device; and a processing module, configured to determine, depending on whether the downlink reference signal sequence is detected, whether the first terminal device is activated within on duration time.

In a possible implementation, the on duration time is configured by using the network device.

In a possible implementation, the downlink reference signal sequence is a channel state information reference signal CSI-RS sequence.

In a possible implementation, the downlink reference signal sequence is used to indicate whether to trigger the at least one terminal device to report channel state information CSI.

In a possible implementation, information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the receiving module is specifically configured to monitor the downlink reference signal sequence before the on duration time or within the on duration time.

In a possible implementation, the processing module is specifically configured to: when the downlink reference signal sequence is detected before the on duration time, monitor a physical downlink channel; or, when the downlink reference signal sequence is detected within the on duration time, enter a sleep state.

The apparatus in this aspect is similar to the method in the third aspect, and therefore has corresponding advantages. Details are not described again.

According to a seventh aspect, this application provides an apparatus, including:
one or more processors; and
a memory, configured to store one or more programs, where
when the one or more programs are executed by the one or more processors, the one or more processors are enabled to implement the method according to any one of the first aspect or the implementations of the first aspect.

According to an eighth aspect, this application provides an apparatus, including:
one or more processors; and
a memory, configured to store one or more programs, where
when the one or more programs are executed by the one or more processors, the one or more processors are enabled to implement the method according to any one of the second aspect or the implementations of the second aspect.

According to a ninth aspect, this application provides a computer-readable storage medium, including a computer program. When the computer program is executed on a computer, the computer is enabled to perform the method according to any one of the first and second aspects or the implementations of the first and second aspects.

According to a tenth aspect, this application provides a computer program product, where the computer program product includes computer program code, and when the computer program code is run on a computer, the computer is enabled to perform the method according to any one of the first and second aspects or the implementations of the first and second aspects.

According to an eleventh aspect, this application provides a communication system, where the communication system includes the apparatus according to any one of the fourth aspect or the implementations of the fourth aspect and the apparatus according to any one of the fifth and sixth aspects or the implementations of the fifth and sixth aspects; or the communication system includes a network device including the apparatus according to any one of the fourth aspect or the implementations of the fourth aspect and a terminal device including the apparatus according to any one of the fifth and sixth aspects or the implementations of the fifth and sixth aspects.

### BRIEF DESCRIPTION OF DRAWINGS

FIG. 1 is an example of a schematic diagram of a structure of a communication system;
FIG. 2 is a flowchart of Embodiment 1 of a communication method according to this application;
FIG. 3 is an example of a schematic diagram of a sending time sequence of a downlink reference signal sequence;
FIG. 4 is another example of a schematic diagram of a sending time sequence of a downlink reference signal sequence;
FIG. 5 is a flowchart of Embodiment 2 of a communication method according to this application;
FIG. 6 is a schematic diagram of a structure of an apparatus embodiment on a network side according to this application;
FIG. 7 is a schematic diagram of a structure of an apparatus embodiment on a terminal side according to this application;
FIG. 8 is a schematic diagram of a structure of an apparatus on a terminal side according to this application;
FIG. 9 is a schematic diagram of a structure of an apparatus on a network side according to this application;
FIG. 10 is a schematic diagram of a structure of a network device according to this application;
FIG. 11 is a schematic diagram of a structure of a terminal device according to this application;
FIG. 12 is another schematic diagram of a structure of a terminal device according to this application; and
FIG. 13 is still another schematic diagram of a structure of a terminal device according to this application.

### DESCRIPTION OF EMBODIMENTS

To make objectives, technical solutions, and advantages of this application clearer, the following clearly and completely describes the technical solutions in this application with reference to accompanying drawings in this application. It is clearly that the described embodiments are some but not all of the embodiments of this application. All other embodiments obtained by a person of ordinary skill in the art based on embodiments of this application without creative efforts shall fall within a protection scope of this application.

In the embodiments, claims, and the accompanying drawings of this specification in this application, the terms "first", "second" and the like are only used for a purpose of distinguishing between descriptions, and cannot be understood as indicating or implying relative importance or indicating or implying a sequence. Moreover, the terms "include", "have", and any other variant thereof are intended to cover a non-exclusive inclusion, for example, including a series of steps or units. Methods, systems, products, or devices are not necessarily limited to those explicitly listed steps or units, but may include other steps or units that are not explicitly listed or that are inherent to such processes, methods, products, or devices.

It should be understood that, in this application, "at least one" means one or more, and "a plurality of' means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally represents an "or" relationship between the associated objects. "At least one of the following" or a similar expression thereof indicates any combination of the following, including any combination of one or more of the following. For example, at least one (piece) of a, b, or c may represent: a, b, c, "a and b", "a and c", "b and c", or "a, b, and c", where a, b, and c may be singular or plural.

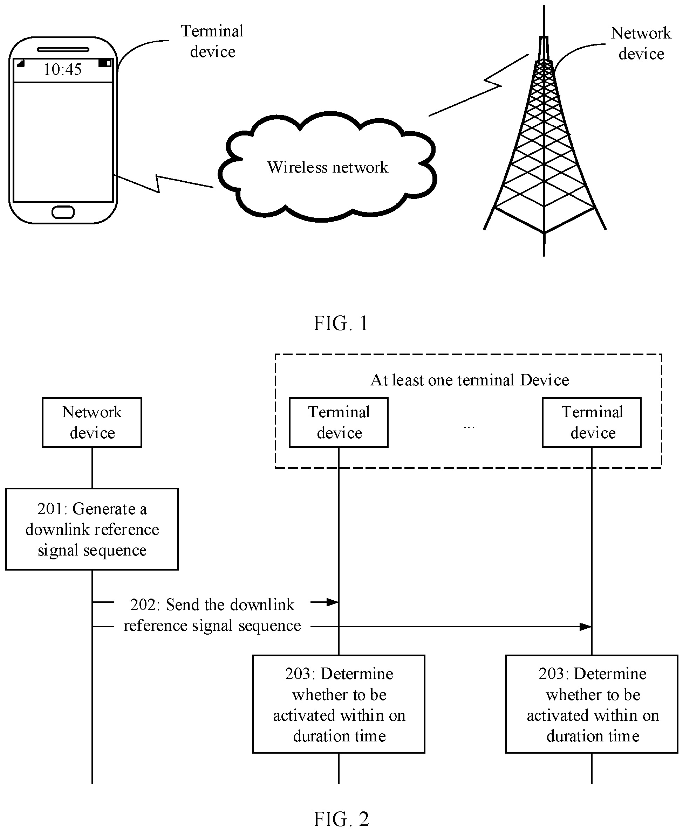

FIG. 1 is an example of a schematic diagram of a structure of a communication system. As shown in FIG. 1, the communication system includes one network device and one terminal device. Optionally, the communication system may alternatively include a plurality of network devices, and coverage of each network device may include another quantity of terminal devices. This is not limited in embodiments of this application. Optionally, the communication system may further include another network entity such as a network controller or a mobility management entity. This is not limited in embodiments of this application. A black arrow in FIG. 1 indicates that a communication connection exists between the network device and the terminal device, for example, through an air interface.

It should be understood that an apparatus located on a network side in the communication system may be any network device with a wireless transceiver function or a chip that may be disposed on the network device. The network device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), and a home base station (for example, a home evolved NodeB, or a home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (Transmission Point, TP), a transmission reception point (Transmission and Reception Point, TRP), or the like; may be a next generation NodeB (next Generation NodeB, gNB) or a transmission point (TRP or TP) in a 5G system, or one antenna panel or one group (including a plurality of antenna panels) of antenna panels of a base station in a 5G system; or may be a network node that constitutes a gNB or a transmission point, for example, a baseband processing unit (Building Base band Unit, BBU) or a distributed unit (Distributed Unit, DU). Further, the network device may be a future communication system, for example, a base station of a 6G system or even a 7G system, or a network device with a similar function.

In some deployments, the gNB may include a centralized unit (centralized unit, CU) and a DU. The gNB may further include a radio frequency unit (Radio Unit, RU). The CU implements some functions of the gNB, and the DU implements some functions of the gNB. For example, the CU implements functions of a radio resource control (Radio Resource Control, RRC) layer and a packet data convergence protocol (Packet Data Convergence Protocol, PDCP) layer; and the DU implements functions of a radio link control (Radio Link Control, RLC) layer, a media access control (Media Access Control, MAC) layer, and a physical (Physical, PHY) layer. Information at the RRC layer eventually becomes the information at the PHY layer, or is converted from the information at the PHY layer. Therefore, in this architecture, higher layer signaling, for example, RRC layer signaling or PDCP layer signaling, may also be considered as being sent by the DU or sent by the DU and the RU. It can be understood that the network device may be a CU node, a DU node, or a device including the CU node and the DU node. In addition, the CU may be classified as a network device in a radio access network, or the CU may be classified as a network device in a core network (Core Network, CN). This is not limited herein.

It should be further understood that a terminal device in the communication system may also be referred to as user equipment (user equipment, UE), an access terminal, a subscriber unit, a subscriber station, a mobile station, a mobile console, a remote station, a remote end, a mobile device, a user terminal, a terminal, a wireless communication device, a user agent, or a user apparatus. The terminal device in embodiments of this application may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal in industrial control (Industrial Control), a wireless terminal in self driving (Self Driving), a wireless terminal in telemedicine (Remote Medical), a wireless terminal in smart grid (Smart Grid), a wireless terminal in transportation safety (Transportation Safety), a wireless terminal in a smart city (Smart City), a wireless terminal in a smart home (Smart Home), or the like. An application scenario is not limited in embodiments of this application. An apparatus on a terminal side in this application may be the foregoing terminal device and a chip that may be disposed on the foregoing terminal device.

It should be understood that for ease of understanding, FIG. 1 schematically shows a communication system. However, this should not constitute any limitation on this application. The communication system may alternatively include a larger quantity of network devices, or may include a larger quantity of terminal devices. The network devices that communicate with different terminal devices may be a same network device, or may be different network devices. Quantities of network devices that communicate with different terminal devices may be the same or may be different. This is not limited in this application.

C-DRX is provided in the communication system. The network device semi-statically configures a C-DRX cycle length based on a service requirement. For example, when a service is sensitive to a latency requirement, a short C-DRX cycle is configured; otherwise, a long C-DRX cycle may be configured. In each C-DRX cycle, the network device configures C-DRX on duration time (on duration time) based on a service arrival status. Within the C-DRX on duration time, the terminal device is in an active state and monitors downlink control signaling. When a data packet such as a physical downlink shared channel (Physical Downlink Shared Channel, PDSCH) arrives, the terminal device performs reception and demodulation in a timely manner. When the C-DRX on duration time expires and no data packet further arrives, the terminal device enters a sleep state, to implement energy saving of the terminal device without data packet transmission. In addition, when the network device determines that no data packet is transmitted within the C-DRX on duration time, for example, only a physical downlink control channel (Physical Downlink Control Channel, PDCCH) is sent, the network device may also indicate, by using higher layer signaling, the terminal device within the C-DRX on duration time to enter the sleep state, so that power consumption is further reduced.

A wake-up signal (Wake Up Signal, WUS) is provided in the communication system. The WUS is used to indicate the terminal device whether to wake up within the C-DRX on duration time. When the network device has downlink data to deliver, the network device indicates, by using the WUS, the terminal device to wake up within the C-DRX on duration time, to receive downlink control information and/or the downlink data. When the network device has no downlink data to send, the network device indicates, by using the WUS, the terminal device to sleep within the C-DRX on duration time, to save energy and power. Generally, a time domain location that technically supports the WUS is before the C-DRX on duration time. For this solution, in a current discussion on power consumption, it is further proposed that in preparation time (Preparation Time, namely, time between the WUS and the C-DRX on duration time) of the terminal device, channel state information reference signal (Channel State Information Reference Signal, CSI-RS) delivery and channel state information (Channel State Information, CSI) reporting are introduced, so that the terminal device and the network device can perform flexible link adaptation, to improve data transmission efficiency. However, in the foregoing solution, the network device needs to configure a WUS resource and a CSI-RS resource. On one hand, resource overheads are increased. On the other hand, the terminal device needs to frequently wake up to separately receive the WUS and the CSI-RS. As a result, power consumption increases.

FIG. 2 is a flowchart of Embodiment 1 of a communication method according to this application. As shown in FIG. 2, the method in this embodiment may include the following steps.

Step 201: A network device generates a downlink reference signal sequence.

The downlink reference signal sequence is used to indicate at least one terminal device whether to be activated within on duration time.

A person skilled in the art may know that a concept of group is introduced in a narrowband internet of things (NarrowBand Internet of Things, NB-IoT) technology, and different WUSs are corresponding to different terminal device groups. For example, it is assumed that 100 terminal devices (numbered 0 to 99) are grouped into four groups, where terminal devices 0 to 24 belong to group 0, terminal devices 25 to 49 belong to group 1, terminal devices 50 to 74 belong to group 2, and terminal devices 75 to 99 belong to group 3. The network device may set four WUSs, and when the terminal device 0 needs to be woken up, only a WUS corresponding to group 0 needs to be sent. All the terminal devices 0 to 24 in group 0 detect the WUS, and are woken up. However, the 75 terminal devices in groups 1, 2, and 3 are not woken up because only WUSs corresponding to the groups to which they belong are monitored.

In the solutions of this application, the downlink reference signal sequence may be used to indicate a single terminal device, or a group of terminal devices. If the downlink reference signal sequence is used to indicate the single terminal device, the downlink reference signal sequence is used to indicate the corresponding terminal device whether to be activated within the on duration time. If the downlink reference signal sequence is used to indicate the group of terminal devices, the downlink reference signal sequence is used to indicate the corresponding group of terminal devices whether to be activated within the on duration time.

In a possible implementation, the downlink reference signal sequence is used to indicate the terminal device whether to be activated within the on duration time. If the network device needs to send data to a terminal device, the network device may wake up the terminal device by using the downlink reference signal sequence corresponding to the terminal device. It should be noted that a quantity of terminals herein may be one or more. The downlink reference signal sequence may be user specific (UE specific). Downlink reference signal sequences for different terminal devices are different, or the WUSs carried on the downlink reference signal sequences for different terminal devices are different. For example, different terminal devices are corresponding to different sequence groups, and the sequence group includes a plurality of downlink reference signal sequences scrambled by using a corresponding user equipment (User Equipment, UE) identity (Identity, ID), to ensure low correlation between the downlink reference signal sequences corresponding to the different terminal devices. A terminal device can detect and correctly interpret only a downlink reference signal sequence in a corresponding sequence group. The terminal device may learn of receiving time of a required downlink reference signal sequence as specified by a protocol or based on information transmitted in configuration information. A corresponding action of the network device is not described again.

In a possible implementation, the downlink reference signal sequence is used to indicate whether a group of terminal devices are activated within the on duration time. The group of terminal devices may include one or more terminal devices. It may also be understood that the at least one terminal device to be woken up by the downlink reference signal sequence may include the one or more terminal devices, the at least one terminal device belongs to a same group, and different groups correspond to different WUS signals. If the network device needs to send data to a group of terminal devices, the network device may wake up the one or more terminal devices by using the downlink reference signal sequence corresponding to the group of terminal devices. A feature of this implementation is that the downlink reference signal sequence is group specific (group/set specific). Downlink reference signal sequences for different groups are different, or WUSs carried on the downlink reference signal sequences for the different groups are different. One or more terminal devices in a same group receive a same downlink reference signal sequence.

In a possible implementation, the network device may send group information and other configuration information together to the terminal device. The group information may include a group identifier, and different group identifiers correspond to different groups. The other configuration information may include a scrambling identity of a downlink reference signal sequence, and a predefined first moment (namely, a location at which the terminal device receives or monitors the downlink reference signal sequence) or a predefined first time period (namely, a time period that is from a start moment and within which the terminal device receives or monitors the downlink reference signal sequence). For example, if the downlink reference signal sequence occupies a plurality of time-domain symbols, the network device scrambles the downlink reference signal sequence in time domain, where scrambling code corresponding to each group (for example, an orthogonal mask OCC in time domain and identification information of the group) is different.

In a possible implementation, terminal devices in a same group receive a downlink reference signal sequence, where the downlink reference signal sequence is group specific (group specific). The terminal devices in the same group are corresponding to the same downlink reference signal sequence or a same downlink reference sequence group. For example, UE 1 and UE 2 belong to a same group, the group corresponds to four downlink reference signal sequences, and each downlink reference signal sequence carries 2-bit information, used to indicate whether the UE 1 and the UE 2 in the group are to be activated and whether CSI is to be reported. In addition, different terminal devices may differently interpret the information carried on the downlink reference signal sequence. For example, in 4-bit information carried on the downlink reference signal sequence, the UE 1 learns, from the first 2 bits, whether to be activated and whether to trigger CSI reporting, and the UE 2 learns, from the last 2 bits, whether to be activated and whether to trigger CSI reporting. Bits that need to be interpreted by each terminal device in a same group may be configured by the network device.

In a possible implementation, the downlink reference signal sequence is a channel state information reference signal (Channel State Information Reference Signal, CSI-RS) sequence. The CSI-RS sequence is used for channel state information measurement, for example, may be used for channel quality measurement, beam management, time offset and frequency offset tracking, and/or radio resource management. The terminal device measures a channel state based on the CSI-RS sequence to obtain the CSI, and determines, based on an indication of the CSI-RS sequence, whether to report the CSI. If the CSI-RS sequence indicates the terminal device to report the CSI, the terminal device reports the CSI obtained through measurement. If the CSI-RS sequence indicates the terminal device not to report the CSI, the terminal device only measures the obtained CSI, and does not need to report the CSI. When the network device periodically configures the CSI-RS, the network device can indicate the terminal device to perform periodic, semi-persistent, or aperiodic CSI reporting. When the network device semi-persistently configures the CSI-RS, the network device can indicate the terminal to report the CSI semi-persistently or aperiodically. When the network device performs aperiodic configuration, the network device indicates the terminal device to report the CSI aperiodically. When periodic CSI reporting is performed, wideband CSI information is reported on a PUCCH. When semi-persistent CSI reporting is performed, optionally, wideband or subband CSI reporting is performed (finer subcarrier-level CSI reporting); and according to load of CSI information, the CSI may be transmitted on a PUSCH or a PUCCH. When aperiodic CSI reporting is performed, optionally, wideband or subband CSI reporting is performed, and CSI information is transmitted on a PUSCH.

In a possible implementation, information carried on the downlink reference signal sequence includes a first field, where the first field is used to indicate the at least one terminal device whether to be activated within the on duration time.

When the network device has a data packet to send to the terminal device, the network device needs to indicate the terminal device to be activated within the on duration time. Therefore, the network device may set the first field to a first value, for example, 1. When the network device has no data packet to send to the terminal device, the network device needs to indicate the terminal device not to be activated within the on duration time. Therefore, the network device may set the first field to a second value, for example, 0. The first value and the second value are different, and are separately one of 0 and 1.

In a possible implementation, the downlink reference signal sequence is further used to indicate whether to trigger the at least one terminal device to report the CSI. Specifically, the information carried on the downlink reference signal sequence includes a second field, where the second field is used to indicate whether to trigger the at least one terminal device to report the CSI.

When the network device needs to indicate the terminal device to report the CSI, the network device may set the second field to the first value, for example, 1. When the network device needs to indicate the terminal device not to report the CSI, the network device may set the second field to the second value, for example, 0. The first value and the second value are different, and are separately one of 0 and 1.

In a possible implementation, the information carried on the downlink reference signal sequence includes a third field, where the third field is used to indicate the at least one terminal device whether to perform bandwidth part BWP switching. For the BWP switching, refer to a definition in a conventional technology. Specifically, the network device indicates, based on learned-of statuses of a plurality of BWP channels and by using the third field in the downlink reference signal sequence, the terminal device to perform BWP switching. For example, the terminal device is indicated to switch to another BWP whose channel quality is better than a current BWP, to ensure a good channel transmission capability. Optionally, the third field includes one or more bits, where the one or more bits are used to indicate a target BWP for switching. For example, the third field includes 2 bits. In this way, the network device may indicate the terminal device to perform switching between candidate BWPs not more than four.

For example, the downlink reference signal sequence generated by the network device includes 16 symbols, and may carry 4-bit information. Therefore, there are 16 available downlink reference signal sequences in total, which are each corresponding to one 4-bit binary string. In this example, the network device may set each bit in the 4-bit binary string by using the following method:

The first bit is used to indicate the terminal device whether to be activated within the on duration time (on duration time). A value of the first bit may be 0 or 1.

The second bit is used to indicate whether to trigger the at least one terminal device to report the channel state information (Channel State Information, CSI). Optionally, the CSI in this embodiment of this application includes but is not limited to at least one of the following information: a precoding matrix indicator (Precoding Matrix Indicator, PMI), a rank indication (Rank Indication, RI), and a channel quality indicator (Channel Quality Indicator, CQI), a CSI-RS resource indicator (CSI-RS Resource Indicator, CRI), and a layer indication (Layer Indication, LI). This is not limited in this embodiment of this application. The value of the second bit may be 0 or 1;

The third and fourth bits are used to indicate whether the at least one terminal device performs bandwidth part (Bandwidth Partial, BWP) switching. In this application, it may be set that each downlink reference signal sequence is associated with a maximum of four BWPs. Therefore, a BWP identifier monitored by the terminal device in next on duration time may be indicated by using the third and fourth bits. Values of the third and fourth bits may be 00, 01, 10, or 11.

The first bit, the second bit, the third bit, and the fourth bit merely represent different bits, and their sequence may be reversed. For example, 4-bit information carried on the downlink reference signal sequence is "1101", where the first bit " 1" indicates the terminal device to be activated during the on duration time. The second bit " 1" indicates to trigger CSI reporting. The third and fourth bits "01" indicate to monitor the second BWP.

It should be noted that, in the foregoing example, a length of the downlink reference signal sequence is 16, and the downlink reference signal sequence may carry the 4-bit information. However, the length of the downlink reference signal sequence is not specifically limited in this application. Therefore, the network device may generate another length of the downlink reference signal sequence to carry information of another quantity of bits, and more or fewer functions may be assigned to each bit of the foregoing information. For example, the length of the downlink reference signal sequence is 64, and the downlink reference signal sequence may carry 6-bit information. In addition to the foregoing 4 bits, the fifth bit may be used to indicate antenna quantity switching (disabling some antenna radio frequency channels to reduce power consumption), the sixth bit may be used to indicate secondary component carrier switching, and the like. In addition, in addition to using 1 bit to indicate a related function in the foregoing example, a plurality of bits may be used to jointly indicate the related function. In this way, a plurality of cases of a corresponding function may be presented by using a combination of values of the plurality of bits.

It should be noted that a relationship between the first field, the second field, and the third field in the foregoing is not limited. For example, the downlink reference signal sequence may include one of the foregoing fields, such as the first field, or two of them, such as the first field and third field, or include the three fields or more fields. Alternatively, the first field and the third field may be a same field, and perform corresponding indications.

Step 202: The network device sends the downlink reference signal sequence to the at least one terminal device, where the at least one terminal device includes a first terminal device.

In a possible implementation, the network device may send the downlink reference signal sequence to a terminal device, where the downlink reference signal sequence is used to wake up the terminal device. That is, if the network device needs to send data to a terminal device, the network device may wake up the terminal device by sending a downlink reference signal sequence corresponding to the terminal device. It should be noted that a quantity of terminals herein may be one or more. The downlink reference signal sequence is user specific (UE specific), and downlink reference signal sequences for different UEs are different, or WUSs carried on the downlink reference signal sequences for the different UEs are different. The terminal device may learn of receiving time of a required downlink reference signal sequence as specified by a protocol or based on information transmitted in configuration information, and monitor the downlink reference signal sequence at the receiving time.

In a possible implementation, the network device may send a downlink reference signal sequence to one or more terminal devices that belong to a same group, to wake up the one or more terminal devices. That is, if the network device needs to send data to a group of terminal devices, the network device may wake up the one or more terminal devices by sending the downlink reference signal sequence corresponding to the group of terminal devices. The downlink reference signal sequence is group/set specific (group/set specific). Downlink reference signal sequences for different groups are different, or WUSs carried on the downlink reference signal sequences for the different groups are different. The one or more terminal devices in the same group receive the same downlink reference signal sequence.

In a possible implementation, the first terminal device receives the downlink reference signal sequence at a first moment, where the first moment may be a moment before the on duration time, or may be a moment within the on duration time. The first moment may be predefined or preconfigured, for example, may be configured by using higher layer signaling.

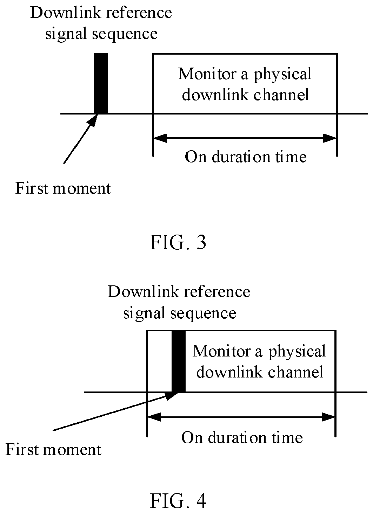

FIG. 3 is an example of a schematic diagram of a sending time sequence of a downlink reference signal sequence. As shown in FIG. 3, a network device may send a downlink reference signal sequence (CSI-RS sequence) before on duration time. A first terminal device is activated and receives the downlink reference signal sequence at a first moment before the on duration time (or within a short period of time starting from the first moment). FIG. 4 is another example of a schematic diagram of a sending time sequence of a downlink reference signal sequence. As shown in FIG. 4, a network device may send a downlink reference signal sequence (CSI-RS sequence) within on duration time. A first terminal device is activated and receives the downlink reference signal sequence at a first moment within the on duration time (or within a short period of time starting from the first moment). The difference between FIG. 3 and FIG. 4 lies in:

In FIG. 3, the first terminal device is activated at the first moment, and the first moment is before the on duration time, that is, the first terminal device changes from a non-working state (for example, a standby state) to a working state at the first moment before the on duration time, to receive the downlink reference signal sequence. Further, the first terminal device enters the non-working state at another moment (after the first moment and before the on duration time) after the receiving of the downlink reference signal sequence. Further, if the downlink reference signal sequence indicates the first terminal device to be activated within the on duration time, the first terminal device changes from the non-working state to the working state after entering the on duration time, and monitors a physical downlink control channel (for example, PDCCH) on a PDCCH candidate occasion (PDCCH candidate occasion). If the downlink reference signal sequence indicates the first terminal device not to be activated within the on duration time, the first terminal device remains in the non-working state after the first moment. In the method, the terminal device changes from the non-working state to the working state at a moment before the on duration time to receive the downlink reference signal sequence. The downlink reference signal sequence may implement a function of a WUS, that is, the terminal device is woken up only when there is downlink data to be sent and the terminal device needs to monitor and receive the downlink data. Power consumption of the terminal device is reduced, and communication efficiency is improved. The downlink reference signal sequence may further indicate the terminal device not to be activated, so that the terminal device enters the non-working state at another moment after the receiving of the downlink reference signal sequence. In this way, the power consumption of the terminal device is further reduced.

In FIG. 4, the first terminal device is activated at the first moment, and the first moment is within the on duration time, that is, the first terminal device is in the working state at the first moment within the on duration time to receive the downlink reference signal sequence. Further, if the downlink reference signal sequence indicates the first terminal device to be activated within the on duration time, the first terminal device remains in the working state at another moment (after the first moment and before the on duration time ends) and monitors a physical downlink control channel (for example, PDCCH) on a PDCCH candidate occasion (PDCCH candidate occasion). If the downlink reference signal sequence indicates the first terminal device not to be activated within the on duration time, the first terminal device enters the non-working state after the first moment. In the method, the terminal device changes from the non-working state to the working state when entering the on duration time, and receives the downlink reference signal sequence at a moment within the on duration time, where the downlink reference signal sequence may implement a function of a WUS and indicate the terminal device to be activated or not to be activated. When the downlink reference signal sequence indicates the terminal device to be activated, the terminal device does not need to change from the non-working state to the working state again, and may remain in the working state within the on duration time, so that the power consumption of the terminal device is reduced and communication efficiency is improved. When the downlink reference signal sequence indicates indicate the terminal device not to be activated, the terminal device enters the non-working state at another moment after the receiving of the downlink reference signal sequence, so that the power consumption of the terminal device is reduced.

The first moment may be configured by the network device. Specifically, the first moment may be configured by using higher layer signaling, and the higher layer signaling may be radio resource control (Radio Resource Control, RRC) signaling.

It should be noted that this embodiment provides an explicit implementation, to be specific, the first field is used to indicate the terminal device whether to be activated within the on duration time.

Step 203: The terminal device determines whether to be activated within the on duration time.

If the downlink reference signal sequence is user specific (UE specific), the terminal device parses the downlink reference signal sequence when receiving the downlink reference signal sequence configured by the network device for the terminal device.

If the downlink reference signal sequence is group/set specific (group/set specific), when receiving the downlink reference signal sequence configured by the network device for a group to which the terminal device belongs, the terminal device descrambles the downlink reference signal sequence of the group to which the terminal device belongs based on scrambling code configured by the network device; and may identify the downlink reference signal sequence required by the terminal device and parse the downlink reference signal sequence. The scrambling code may be identification information of the terminal, for example, a user equipment UE ID. The terminal device obtains a corresponding downlink reference signal sequence. Refer to the descriptions in step 201. Details are not described again.

In a possible implementation, after receiving the downlink reference signal sequence at a first moment (where the first moment is before the on duration time), the first terminal device obtains information about at least one bit carried on the downlink reference signal sequence. Then, the first terminal device performs a corresponding operation based on a value of each bit in the information. If the first bit is 1, the first terminal device changes from the non-working state to the working state within the on duration time, and monitors a physical downlink control channel (for example, a PDCCH) on a PDCCH candidate occasion (PDCCH candidate occasion). The PDCCH candidate occasion may be configured by the network device. If the second bit is 1, the first terminal device performs channel measurement based on the downlink reference signal sequence and reports the CSI at a specified moment; or if the second bit is 0, the first terminal device may perform channel measurement based on the downlink reference signal sequence, but does not need to report the CSI. If the first bit is 0, the first terminal device enters the non-working state after receiving the downlink reference signal sequence. If the second bit is 1, the first terminal device performs channel measurement based on the downlink reference signal sequence and reports the CSI a specified moment; or if the second bit is 0, the first terminal device may perform channel measurement based on the downlink reference signal sequence, but does not need to report the CSI.

In a possible implementation, after receiving the downlink reference signal sequence at the first moment (where the first moment is within the on duration time), the first terminal device obtains information about the at least one bit carried on the downlink reference signal sequence. Then, the first terminal device performs a corresponding operation based on a value of each bit in the information. If the first bit is 1, the first terminal device enters the non-working state after receiving the downlink reference signal sequence. If the first bit is 0, the first terminal device monitors the physical downlink control channel (for example, a PDCCH) on a PDCCH candidate occasion (PDCCH candidate occasion) at another moment (after the first moment and before the on duration time ends) after the receiving of the downlink reference signal sequence. If the second bit is 1, the first terminal device performs channel measurement based on the downlink reference signal sequence and reports the CSI at a specified moment; or if the second bit is 0, the first terminal device may perform channel measurement based on the downlink reference signal sequence, but does not need to report the CSI.

It should be noted that the values of 0 and 1 of the bits in the foregoing example are merely examples for description, and the bits may alternatively be set to other values. This is not specifically limited in this application.

In this embodiment, the network device indicates WUS information by using the CSI-RS sequence, so that the downlink reference signal sequence can implement the function of the WUS. The terminal device is woken up only when there is downlink data to be sent and the terminal device needs to monitor and receive the downlink data. Because the downlink reference signal sequence and an additional wake-up signal do not need to be separately sent, for a transmitter side, such as the network device, and a receiver side, such as the terminal device, power is saved. Further, a processing procedure is simplified, and communication efficiency is improved.

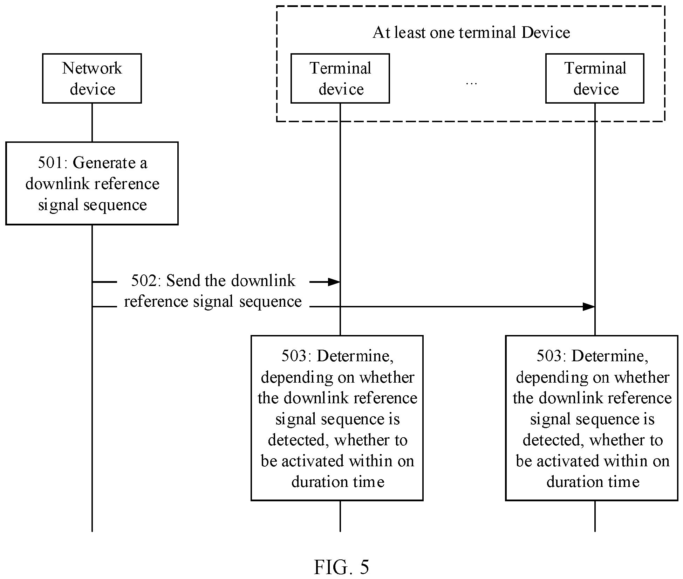

FIG. 5 is a flowchart of Embodiment 2 of a communication method according to this application. As shown in FIG. 5, the method in this embodiment may include the following steps:

Step 501: A network device generates a downlink reference signal sequence.

A technical principle of step 501 is similar to that of step 201. A difference between step 501 and step 201 lies in that, in this embodiment, the network device generates the downlink reference signal sequence only when determining that a data packet needs to be sent to a terminal device. That is, depending on whether to send the downlink reference signal sequence, the network device indicates at least one terminal device whether to be activated. Therefore, the solution in this embodiment may not include the first field in the foregoing embodiment.

Step 502: The network device sends the downlink reference signal sequence to the at least one terminal device, where the at least one terminal device includes a first terminal device.

A technical principle of step 502 is similar to that of step 202. A difference between step 502 and step 202 lies in that this embodiment provides an implicit implementation, to be specific, the network device sends the downlink reference signal sequence to the terminal device only when there is the data packet to be sent to the terminal device, and when there is no data packet to be sent to the terminal device, the network device does not send the downlink reference signal sequence. In other words, if the terminal device receives the downlink reference signal sequence, it indicates that the network device has the data packet to send to the terminal device.

Step 503: The terminal device determines, depending on whether the downlink reference signal sequence is detected, whether to be activated within on duration time.

A technical principle of step 503 is similar to that of step 203. A difference between step 503 and step 203 lies in that, in this embodiment, the terminal device determines, depending on whether the downlink reference signal sequence is detected (that is, blindly detected), whether to be activated.

In a possible implementation, the first terminal device is activated and monitors the downlink reference signal sequence at a first moment (where the first moment is before the on duration time). If the downlink reference signal sequence is detected, the first terminal device changes from a non-working state to a working state within the on duration time. That is, the first terminal device monitors a physical downlink control channel (for example, a PDCCH) on a PDCCH candidate occasion (PDCCH candidate occasion). If the downlink reference signal sequence is not detected, the first terminal device enters the non-working state after receiving the downlink reference signal sequence, and remains in the non-working state within the on duration time, that is, does not monitor the physical downlink channel (for example, a PDCCH).

In a possible implementation, the first terminal device is activated and monitors the downlink reference signal sequence at a first moment (where the first moment is within the on duration time). If the downlink reference signal sequence is detected, the first terminal device monitors a physical downlink control channel (for example, a PDCCH) at another moment (after the first moment and before the on duration time ends) on a PDCCH candidate occasion (PDCCH candidate occasion). If the downlink reference signal sequence is not detected, the first terminal device enters a non-working state after receiving the downlink reference signal sequence.

The first moment may be configured by the network device. Specifically, the first moment may be configured by using higher layer signaling, and the higher layer signaling may be radio resource control (Radio Resource Control, RRC) signaling.

In a possible implementation, the first terminal device determines, based on that the downlink reference signal sequence is detected, to be activated within the on duration time. In this case, a relationship between the downlink reference signal sequence and the corresponding on duration time may be sent by a network by using configuration information, or may be agreed upon by both parties.

In a possible implementation, the first terminal device determines, based on that the downlink reference signal sequence is not detected, to be activated within the on duration time.

In a possible implementation, if the network device does not have the data packet to send to the terminal device, the network device may still send the downlink reference signal sequence to the first terminal device, and after detecting the downlink reference signal sequence, the first terminal device enters a sleep state when receiving the downlink reference signal sequence. However, the first terminal device performs channel measurement and CSI reporting based on the downlink reference signal sequence, to prevent a problem that a channel change cannot be reported to the network device during a sleep period when the first terminal device sleeps for a long time.

In this embodiment, the downlink reference sequence may be a CSI-RS sequence. The network device indicates WUS information by using the CSI-RS sequence, so that the downlink reference signal sequence can implement a function of a WUS, and wake up the terminal device only when there is downlink data to be sent and the terminal device needs to monitor and receive the downlink data. In this way, power consumption of the terminal device can be reduced, and a function of a CSI-RS can be implemented to measure a channel state and trigger the terminal device to perform CSI reporting. Therefore, communication efficiency can be improved.

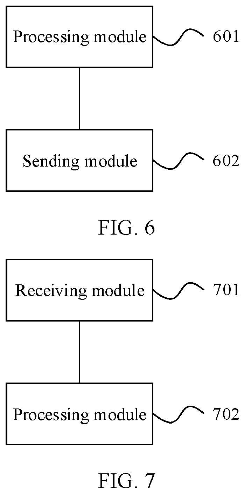

FIG. 6 is a schematic diagram of a structure of an embodiment of an apparatus on a network side according to this application. As shown in FIG. 6, the apparatus may be the foregoing network device or a chip or an integrated circuit that may be disposed in the network device. The apparatus in this embodiment may include a processing module 601 and a sending module 602. The processing module 601 is configured to generate a downlink reference signal sequence, where the downlink reference signal sequence is used to indicate at least one terminal device whether to be activated within on duration time; and the sending module 602 is configured to send the downlink reference signal sequence to the at least one terminal device.

In a possible implementation, the downlink reference signal sequence is a channel state information reference signal CSI-RS sequence.

In a possible implementation, the downlink reference signal sequence is further used to indicate whether to trigger the at least one terminal device to report channel state information CSI.

In a possible implementation, information carried on the downlink reference signal sequence includes a first field, where the first field is used to indicate the at least one terminal device whether to be activated within the on duration time.

In a possible implementation, the information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the sending module 602 is specifically configured to send the downlink reference signal sequence to the at least one terminal device before the on duration time or within the on duration time.

The apparatus in this embodiment may be configured to perform the technical solutions of the method embodiments shown in FIG. 2 to FIG. 5. Implementation principles and technical effects of the apparatus are similar and are not described herein again.

FIG. 7 is a schematic diagram of a structure of an embodiment of an apparatus on a terminal side according to this application. As shown in FIG. 7, the apparatus may be the foregoing terminal device or a chip or an integrated circuit that may be disposed in the terminal device. The apparatus in this embodiment may include a receiving module 701 and a processing module 702. The receiving module 701 is configured to receive a downlink reference signal sequence, where the downlink reference signal sequence is used to indicate at least one terminal device whether to be activated within on duration time, and the at least one terminal device includes a first terminal device; and the processing module 702 is configured to determine whether the first terminal device is to be activated within the on duration time.

In a possible implementation, the downlink reference signal sequence is a channel state information reference signal CSI-RS sequence.

In a possible implementation, the downlink reference signal sequence is further used to indicate whether to trigger the at least one terminal device to report channel state information CSI.

In a possible implementation, information carried on the downlink reference signal sequence includes a first field, where the first field is used to indicate the at least one terminal device whether to be activated within the on duration time.

In a possible implementation, the information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the receiving module 701 is specifically configured to receive the downlink reference signal sequence before the on duration time or within the on duration time.

In a possible implementation, the processing module 702 is further configured to: when the downlink reference signal sequence is received before the on duration time, if the downlink reference signal sequence indicates the at least one terminal device to be activated within the on duration time, monitor a physical downlink channel; or, when the downlink reference signal sequence is received within the on duration time, if the downlink reference signal sequence indicates the at least one terminal device not to be activated within the on duration time, enter a sleep state within the on duration time.

In a possible implementation, the receiving module 701 is further configured to monitor the downlink reference signal sequence, where the downlink reference signal sequence corresponds to the at least one terminal device, and the at least one terminal device includes the first terminal device; and the processing module 702 is configured to determine, depending on whether the downlink reference signal sequence is detected, whether the first terminal device is to be activated within the on duration time.

In a possible implementation, the on duration time is configured by using the network device.

In a possible implementation, the downlink reference signal sequence is a channel state information reference signal CSI-RS sequence.

In a possible implementation, the downlink reference signal sequence is used to indicate whether to trigger the at least one terminal device to report channel state information CSI.

In a possible implementation, information carried on the downlink reference signal sequence includes a second field, where the second field is used to indicate whether to trigger the at least one terminal device to report the channel state information CSI.

In a possible implementation, the information carried on the downlink reference signal sequence includes a third field, where the third field is used to indicate the at least one terminal device whether to perform bandwidth part BWP switching.

In a possible implementation, the receiving module 701 is specifically configured to monitor the downlink reference signal sequence before the on duration time or within the on duration time.

In a possible implementation, the processing module 702 is specifically configured to: when the downlink reference signal sequence is detected before the on duration time, monitor the physical downlink channel; or, when the downlink reference signal sequence is detected within the on duration time, enter the sleep state within the on duration time.

The apparatus in this embodiment may be configured to perform the technical solutions of the method embodiments shown in FIG. 2 to FIG. 5. Implementation principles and technical effects of the apparatus are similar and are not described herein again.

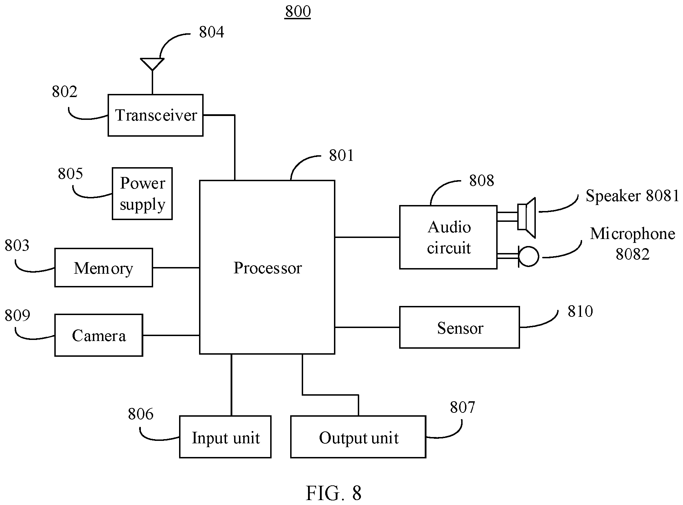

FIG. 8 is a schematic diagram of a structure of an apparatus on a terminal side according to this application. As shown in FIG. 8, the apparatus 800 includes a processor 801 and a transceiver 802. The apparatus may be a terminal device or a chip or an integrated circuit in the terminal device.

Optionally, the apparatus 800 further includes a memory 803. The processor 801, the transceiver 802, and the memory 803 may communicate with each other through an internal connection path, to transfer a control signal and/or a data signal

The memory 803 is configured to store a computer program. The processor 801 is configured to execute the computer program stored in the memory 803, to implement a function of the processing module 702 in the apparatus embodiment shown in FIG. 7. The transceiver 802 is configured to implement a function of the receiving module 701 in the apparatus embodiment shown in FIG. 7.

Optionally, the memory 803 may also be integrated into the processor 801, or may be independent of the processor 801.

Optionally, when the apparatus 800 in this embodiment is the terminal device, the apparatus 800 may further include an antenna 804, configured to transmit a signal output by the transceiver 802. Alternatively, the transceiver 802 receives the signal through the antenna.

Optionally, when the apparatus 800 in this embodiment is the terminal device, the apparatus 800 may further include a power supply 805, configured to supply power to various components or circuits in the apparatus.

In addition, to improve functions of the apparatus, further optionally, the apparatus 800 may further include one or more of an input units 806, a display unit 807 (which may also be considered as an output unit), an audio circuit 808, a cameras 809, a sensor 810, and the like. The audio circuit may further include a speaker 8081, a microphone 8082, and the like. Details are not described herein.

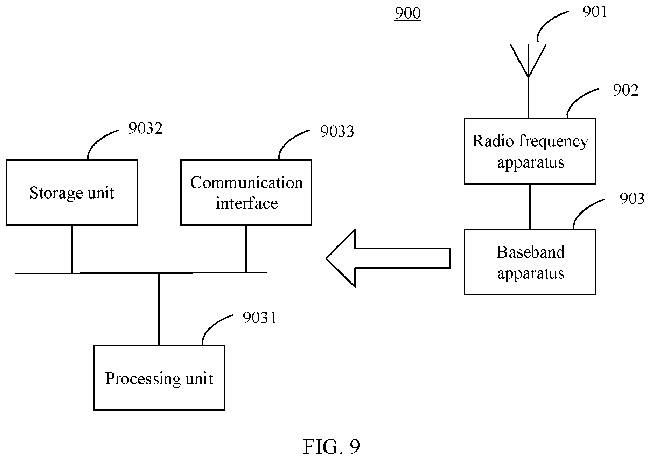

FIG. 9 is a schematic diagram of a structure of an apparatus on a network side according to this application. As shown in FIG. 9, the apparatus 900 includes an antenna 901, a radio frequency apparatus 902, and a baseband apparatus 903. The antenna 901 is connected to the radio frequency apparatus 902. In an uplink direction, the radio frequency apparatus 902 receives a signal from a terminal device through the antenna 901, and sends the received signal to the baseband apparatus 903 for processing. In a downlink direction, the baseband apparatus 903 generates a signal that needs to be sent to the terminal device and sends the generated signal to the radio frequency apparatus 902. The radio frequency apparatus 902 transmits the signal through the antenna 901.

The baseband apparatus 903 may include one or more processing units 9031. The processing unit 9031 may specifically be a processor.

In addition, the baseband apparatus 903 may further include one or more storage units 9032 and one or more communication interfaces 9033. The storage unit 9032 is configured to store a computer program and/or data. The communication interface 9033 is configured to exchange information with the radio frequency apparatus 902. The storage unit 9032 may specifically be a memory. The communication interface 9033 may be an input/output interface or a transceiver circuit.

Optionally, the storage unit 9032 may be a storage unit located on a same chip as the processing unit 9031, namely, an on-chip storage unit; or may be a storage unit located on a different chip from the processing unit 9031, namely, an off-chip storage unit. This is not limited in this application.

The baseband apparatus 903 may be configured to implement a function of the processing module 601 in the apparatus embodiment shown in FIG. 6. The radio frequency apparatus 902 may be configured to implement a function of the sending module 602 in the apparatus embodiment shown in FIG. 6.

When data needs to be sent, the processing unit 9031 performs baseband processing on the to-be-sent data, and outputs a baseband signal to the radio frequency apparatus 902. The radio frequency apparatus 902 performs radio frequency processing on the baseband signal and sends a radio frequency signal to the outside in a form of an electromagnetic wave through the antenna 901. When data arrives, the radio frequency apparatus 902 receives the radio frequency signal through the antenna 901, converts the radio frequency signal into the baseband signal, and outputs the baseband signal to the processing unit 9031. The processing unit 9031 converts the baseband signal into the data and processes the data. For ease of description, only one storage unit and one processing unit are shown in the figure. In an actual device product, there may be one or more processing units and one or more storage units. The storage unit may also be referred to as a storage medium, a storage device, or the like. The storage unit may be disposed independent of the processing unit, or may be integrated with the processing unit. This is not limited in this embodiment of this application.

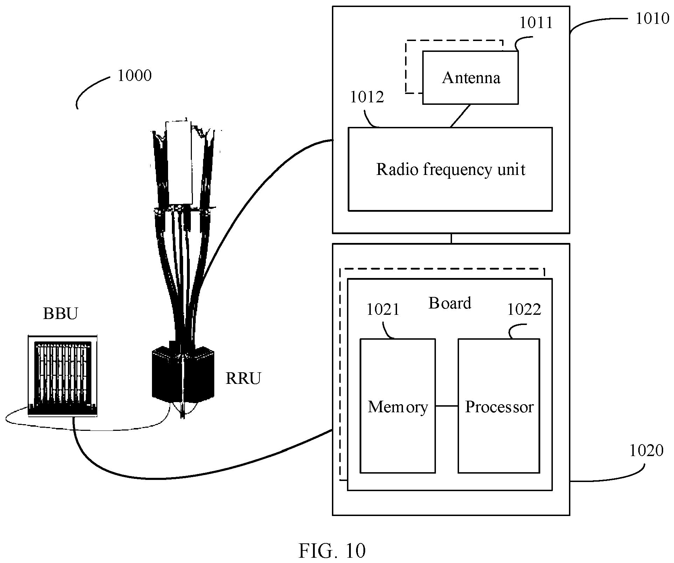

When the apparatus in this embodiment is a network device, the network device may be shown in FIG. 10. The network device 1000 includes one or more radio frequency units, for example, a remote radio frequency unit (remote radio unit, RRU) 1010 and one or more baseband units (baseband units, BBUs) (which may also referred to as a digital unit, digital unit, DU) 1020. The RRU 1010 may be referred to as a transceiver module. Optionally, the transceiver module may also be referred to as a transceiver machine, a transceiver circuit, a transceiver, or the like, and may include at least one antenna 1011 and a radio frequency unit 1012. The RRU 1010 is mainly configured to receive and send a radio frequency signal, and perform conversion between the radio frequency signal and a baseband signal. For example, the RRU 1010 is configured to send indication information to a terminal device. The BBU 1020 is mainly configured to perform baseband processing, control a base station, and the like. The RRU 1010 and the BBU 1020 may be physically disposed together, or may be physically disposed separately, namely, a distributed base station.

The BBU 1020 is a control center of the base station, may also be referred to as a processing module, and is mainly configured to implement a baseband processing function such as channel coding, reusing, modulation, and frequency spread. For example, the BBU (the processing module) may be configured to control the base station to perform an operation procedure related to the network device in the foregoing method embodiments, for example, generate the foregoing indication information.

In an example, the BBU 1020 may include one or more boards. A plurality of boards may jointly support a radio access network (for example, an LTE network) having a single access standard, or may separately support radio access networks (for example, the LTE network, a 5G network, or another network) having different access standards. The BBU 1020 further includes a memory 1021 and a processor 1022. The memory 1021 is configured to store necessary instructions and data. The processor 1022 is configured to control the base station to perform a necessary action, for example, the processor 1022 is configured to control the base station to perform the operation procedure related to the network device in the foregoing method embodiments. The memory 1021 and the processor 1022 may serve one or more boards. In other words, a memory and a processor may be independently disposed on each board. Alternatively, a plurality of boards may share a same memory and a same processor. In addition, a necessary circuit may be further disposed on each board.

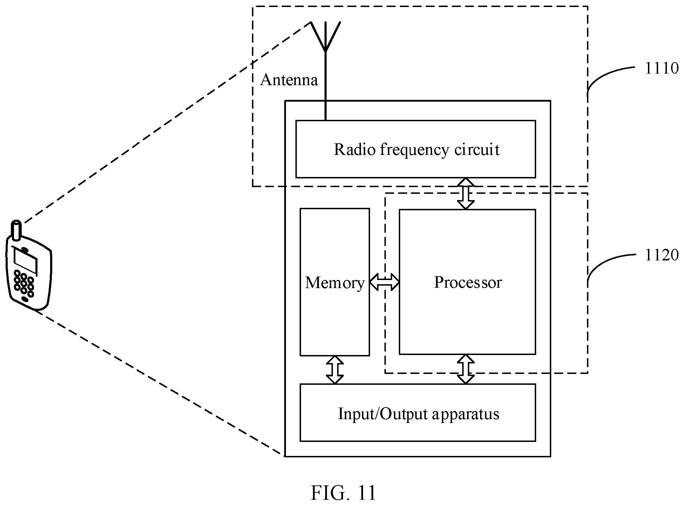

When the apparatus in this embodiment is a terminal device, the terminal device may be shown in FIG. 11, and the terminal device includes a transceiver unit 1110 and a processing unit 1120. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. In other words, the transceiver unit 1110 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 1110 is configured to perform a sending operation and a receiving operation on a terminal device side in the foregoing method embodiments, and the processing unit 1120 is configured to perform another operation other than the receiving and sending operations of the terminal device in the foregoing method embodiments.

For example, in an implementation, the transceiver unit 1110 is configured to perform the sending operation on the terminal device side in step 202/502, and/or the transceiver unit 1110 is further configured to perform another receiving and sending step on the terminal device side in this embodiment of this application. The processing unit 1120 is configured to perform step 203/503, and/or the processing unit 1120 is further configured to perform another processing step on the terminal device side in this embodiment of this application.

When the apparatus in this embodiment is a chip apparatus or circuit, the chip apparatus may include the transceiver unit and the processing unit. The transceiver unit may be an input/output circuit and/or a communication interface. The processing unit is a processor, a microprocessor, or an integrated circuit integrated on the chip. When the apparatus is an apparatus on a network side, for functions of the foregoing units included in the apparatus, refer to descriptions of corresponding modules in FIG. 6. When the apparatus is an apparatus on a terminal side, for functions of the foregoing units included in the apparatus, refer to descriptions of corresponding modules in FIG. 7.

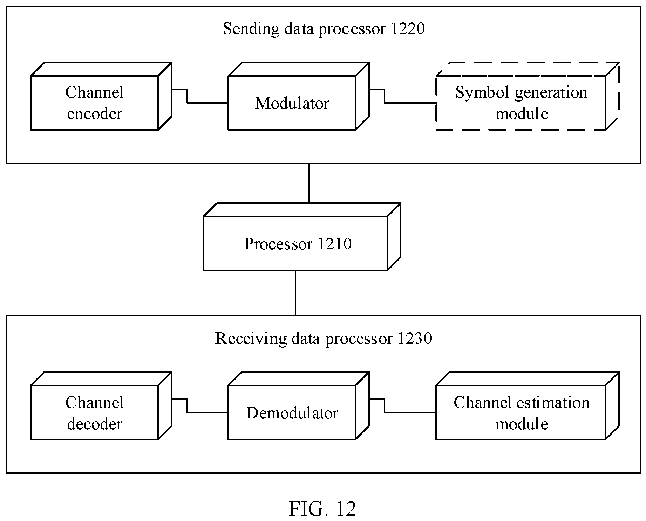

When the apparatus in this embodiment is a terminal device, the terminal device may be further shown in FIG. 12. The terminal device includes a processor 1210, a data sending processor 1220, and a data receiving processor 1230. The processing module in the foregoing embodiment may be the processor 1210 in FIG. 12, and implements a corresponding function. The sending module/receiving module in the foregoing embodiment may be the data sending processor 1220 and/or the data receiving processor 1230 in FIG. 12. Although FIG. 12 shows a channel encoder and a channel decoder, it may be understood that the modules are merely examples, and do not constitute a limitation on this embodiment.

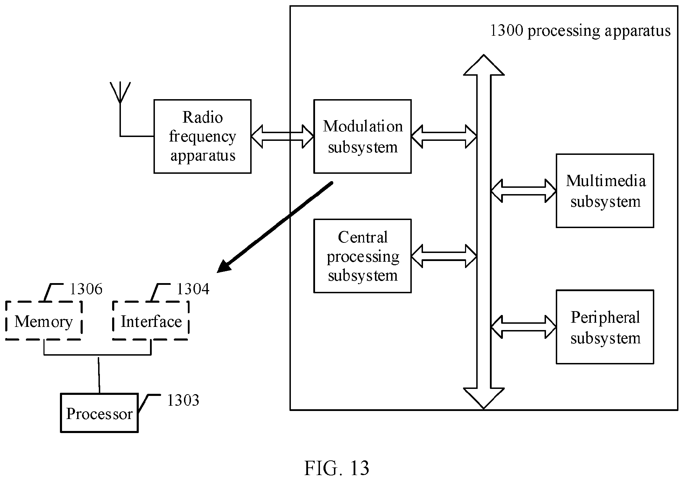

When the apparatus in this embodiment is a terminal device, the terminal device may be further shown in FIG. 13. A processing apparatus 1300 includes modules such as a modulation subsystem, a central processing subsystem, and a peripheral subsystem. The apparatus in this embodiment may be used as the modulation subsystem therein. Specifically, the modulation subsystem may include a processor 1303 and an interface 1304. The processor 1303 completes a function of the foregoing processing module, and the interface 1304 completes a function of the foregoing sending module/receiving module. In another variation, the modulation subsystem includes a memory 1306, the processor 1303, and a program that is stored in the memory 1306 and that can be run on the processor. When executing the program, the processor 1303 implements the method on the terminal device side in the foregoing method embodiments. It should be noted that the memory 1306 may be a nonvolatile memory or a volatile memory. The memory 1306 may be located in the modulation subsystem, or may be located in the processing apparatus 1300, provided that the memory 1306 can be connected to the processor 1303.

In another form of this embodiment, a computer-readable storage medium is provided, where the computer-readable storage medium stores instructions. When the instructions are executed, the method on the terminal device side or the network device side in the foregoing method embodiments is performed.

In another form of this embodiment, a computer program product including the instructions is provided. When the instructions are executed, the method on the terminal device side or the network device side in the foregoing method embodiments is performed.

The processor described in foregoing embodiments may be an integrated circuit chip and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic component, a discrete gate or a transistor logic device, or a discrete hardware component. The general-purpose processor may be a microprocessor, or the processor may be any conventional processor or the like. The steps of the methods disclosed in embodiments of this application may be directly completed by using a hardware encoding processor, or may be completed by using a combination of hardware and software modules in an encoding processor. The software modules may be located in a mature storage medium in the art, such as a random access memory, a flash memory, a read-only memory, a programmable read-only memory, an electrically-erasable programmable read-only memory, or a register. The storage medium is located in the memory, and the processor reads information in the memory and completes the steps in the foregoing methods in combination with the hardware of the processor.

The memory in the foregoing embodiments may be a volatile memory or a nonvolatile memory, or may include both the volatile memory and the nonvolatile memory. The nonvolatile memory may be the read-only memory (read-only memory, ROM), the programmable read-only memory (programmable ROM, PROM), an erasable programmable read-only memory (erasable PROM, EPROM), the electrically-erasable programmable read-only memory (electrically EPROM, EEPROM), or the flash memory. The volatile memory may be the random access memory (random access memory, RAM), used as an external cache. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and method described in this specification include but are not limited to these memories and any memory of another suitable type.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in the embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which is a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating a downlink reference signal sequence, wherein the downlink reference signal sequence is used to indicate at least one terminal device whether to be activated within on duration time; and
sending the downlink reference signal sequence to the at least one terminal device.

2. The method according to claim 1, wherein the downlink reference signal sequence is a channel state information reference signal CSI-RS sequence.

3. The method according to claim 1 or 2, wherein the downlink reference signal sequence is further used to indicate whether to trigger the at least one terminal device to report channel state information CSI.

4. The method according to any one of claims 1 to 3, wherein information carried on the downlink reference signal sequence comprises a first field, wherein the first field is used to indicate the at least one terminal device whether to be activated within the on duration time.

5. The method according to any one of claims 1 to 4, wherein the information carried on the downlink reference signal sequence comprises a second field, wherein the second field is used to indicate whether to trigger the at least one terminal device to report the channel state information CSI.

6. The method according to any one of claims 1 to 5, wherein the information carried on the downlink reference signal sequence comprises a third field, wherein the third field is used to indicate whether the at least one terminal device performs bandwidth part BWP switching.

7. The method according to any one of claims 1 to 6, wherein the sending the downlink reference signal sequence to the at least one terminal device comprises:
sending the downlink reference signal sequence to the at least one terminal device before the on duration time or within the on duration time.

8. A communication method, comprising:
receiving a downlink reference signal sequence, wherein the downlink reference signal sequence is used to indicate at least one terminal device whether to be activated within on duration time, and the at least one terminal device comprises a first terminal device; and
determining whether the first terminal device is activated within the on duration time.

9. The method according to claim 8, wherein the downlink reference signal sequence is a channel state information reference signal CSI-RS sequence.

10. The method according to claim 8 or 9, wherein the downlink reference signal sequence is further used to indicate whether to trigger the at least one terminal device to report channel state information CSI.

11. The method according to any one of claims 8 to 10, wherein information carried on the downlink reference signal sequence comprises a first field, wherein the first field is used to indicate the at least one terminal device whether to be activated within the on duration time.

12. The method according to any one of claims 8 to 11, wherein the information carried on the downlink reference signal sequence comprises a second field, wherein the second field is used to indicate whether to trigger the at least one terminal device to report the channel state information CSI.

13. The method according to any one of claims 8 to 12, wherein the information carried on the downlink reference signal sequence comprises a third field, wherein the third field is used to indicate whether the at least one terminal device performs bandwidth part BWP switching.

14. The method according to any one of claims 8 to 13, wherein the receiving a downlink reference signal sequence comprises:
receiving the downlink reference signal sequence before the on duration time or within the on duration time.

15. The method according to claim 14, further comprising:
when the downlink reference signal sequence is received before the on duration time, if the downlink reference signal sequence indicates the at least one terminal device to be activated within the on duration time, monitoring a physical downlink channel; or
when the downlink reference signal sequence is received within the on duration time, if the downlink reference signal sequence indicates the at least one terminal device not to be activated within the on duration time, entering a sleep state.

16. An apparatus, comprising:
a processing module, configured to generate, a downlink reference signal sequence, wherein the downlink reference signal sequence is used to indicate at least one terminal device whether to be activated within on duration time; and
a sending module, configured to send the downlink reference signal sequence to the at least one terminal device.

17. The apparatus according to claim 16, wherein the downlink reference signal sequence is a channel state information reference signal CSI-RS sequence.

18. The apparatus according to claim 16 or 17, wherein the downlink reference signal sequence is further used to indicate whether to trigger the at least one terminal device to report channel state information CSI.

19. The apparatus according to any one of claims 16 to 18, wherein information carried on the downlink reference signal sequence comprises a first field, wherein the first field is used to indicate the at least one terminal device whether to be activated within the on duration time.

20. The apparatus according to any one of claims 16 to 19, wherein the information carried on the downlink reference signal sequence comprises a second field, wherein the second field is used to indicate whether to trigger the at least one terminal device to report the channel state information CSI.

21. The apparatus according to any one of claims 16 to 20, wherein the information carried on the downlink reference signal sequence comprises a third field, wherein the third field is used to indicate whether the at least one terminal device performs bandwidth part BWP switching.

22. The apparatus according to any one of claims 16 to 21, wherein the sending module is specifically configured to send the downlink reference signal sequence to the at least one terminal device before the on duration time or within the on duration time.

23. An apparatus, comprising:
a receiving module, configured to receive a downlink reference signal sequence, wherein the downlink reference signal sequence is used to indicate at least one terminal device whether to be activated within on duration time, and the at least one terminal device comprises a first terminal device; and
a processing module, configured to determine the first terminal device whether to be activated within the on duration time.

24. The apparatus according to claim 23, wherein the downlink reference signal sequence is a channel state information reference signal CSI-RS sequence.

25. The apparatus according to claim 23 or 24, wherein the downlink reference signal sequence is further used to indicate whether to trigger the at least one terminal device to report channel state information CSI.

26. The apparatus according to any one of claims 23 to 25, wherein information carried on the downlink reference signal sequence comprises a first field, wherein the first field is used to indicate the at least one terminal device whether to be activated within the on duration time.

27. The apparatus according to any one of claims 23 to 25, wherein the information carried on the downlink reference signal sequence comprises a second field, wherein the second field is used to indicate whether to trigger the at least one terminal device to report the channel state information CSI.

28. The apparatus according to any one of claims 23 to 27, wherein the information carried on the downlink reference signal sequence comprises a third field, wherein the third field is used to indicate whether the at least one terminal device performs bandwidth part BWP switching.

29. The apparatus according to any one of claims 23 to 28, wherein the receiving module is specifically configured to receive the downlink reference signal sequence before the on duration time or within the on duration time.

30. The apparatus according to claim 29, wherein the processing module is further configured to: when the downlink reference signal sequence is received before the on duration time, if the downlink reference signal sequence indicates the at least one terminal device to be activated within the on duration time, monitor a physical downlink channel; or when the downlink reference signal sequence is received within the on duration time, if the downlink reference signal sequence indicates the at least one terminal device not to be activated within the on duration time, enable the terminal device to enter a sleep state.

31. An apparatus, comprising:
one or more processors; and
a memory, configured to store one or more programs, wherein
when the one or more programs are executed by the one or more processors, the one or more processors are enabled to implement the method according to any one of claims 1 to 7.

32. An apparatus, comprising:
one or more processors; and
a memory, configured to store one or more programs, wherein
when the one or more programs are executed by the one or more processors, the one or more processors are enabled to implement the method according to any one of claims 8 to 15.

33. A computer-readable storage medium, comprising a computer program, and when the computer program is executed on a computer, the computer is enabled to perform the method according to any one of claims 1 to 15.

34. A computer program product, wherein the computer program product comprises computer program code, and when the computer program code is run on a computer, the computer is enabled to perform the method according to any one of claims 1 to 15.
